# FASCICULE DE BREVET EUROPEEN

(11) **EP 3 404 149 B1**
(45) Date de publication et mention de la délivrance du brevet: **18.12.2019**
(21) Numéro de dépôt: 18170725.8
(22) Date de dépôt: 04.05.2018
(51) Int. Cl.: E03C 1/02, F16L 5/00, F16L 37/00, F16L 41/00

(54) **DISPOSITIF DE MONTAGE D'UN ÉLÉMENT DE RACCORDEMENT, EN VUE DE RACCORDER UNE CONDUITE AU TRAVERS D'UNE CLOISON**
MONTAGEVORRICHTUNG EINES VERBINDUNGSELEMENTS ZUM VERBINDEN EINER LEITUNG DURCH EINE TRENNWAND
DEVICE FOR MOUNTING A CONNECTING ELEMENT, FOR CONNECTING A PIPE THROUGH A PARTITION

(30) Priorité: 11.05.2017 FR 1754126
(43) Date de publication de la demande: 21.11.2018
(73) Titulaire: Watts Industries France, 84270 Vedene (FR)
(72) Inventeur: CHEVALLIER, Vincent, 80510 Longpré-Les-Corps-Saints (FR); PLACETTE, Denis, 80100 Abbeville (FR); SIMON, Willy, 80130 Bourseville (FR)
(74) Mandataire: Casalonga

(56) Documents cités:
- EP-A1- 3 115 517
- FR-A1- 2 944 851
- FR-A1- 2 948 434
- FR-A1- 3 005 971
- US-A1- 2015 259 891

## Description

La présente invention concerne un dispositif de montage pour installations sanitaires.

Dans les constructions modernes de logements, il est courant que les conduites d'arrivée d'eau ou de gaz arrivent, depuis le sol, en arrière d'une cloison intérieure de faible épaisseur, par exemple en plâtre, située généralement à distance d'une cloison arrière et que des organes de robinetterie situés en avant de la cloison intérieure soient reliés au travers de la cloison à ces conduites par l'intermédiaire d'éléments de raccordement fixés sur cette cloison.

Sont connus des dispositifs de raccordement comprenant des éléments de raccordement qui présentent des épaulements axiaux en appui contre des platines de montage et qui sont fixés sur ces dernières, ces platines de montage étant destinées à être fixées contre la face avant de cloisons. De tels dispositifs de raccordement sont décrits dans les brevets EP 1 348 815, FR 2 926 571, FR 2 926 868, FR 2 936 855, FR 2 948 434, FR 3 005 971.

Par ailleurs, le brevet FR 2 944 851 décrit un système très complexe de fixation d'un raccord, monté au travers d'une ouverture d'une cloison et dans lequel une douille portant le raccord est munie d'une collerette externe venant en appui sur une face avant de la cloison et des moyens d'appui reliés à la douille venant en appui sur une face arrière de la cloison, ces moyens d'appui moyens d'appui arrière étant formés soit par des coulisseaux radiaux actionnés radialement par une douille déplacée axialement soit par des dents se déployant radialement sous l'effet d'une douille déplacée axialement. Il s'agit donc d'un système de fixation par prise en sandwich ou enserrement de la cloison. Le document FR2944851 est considéré comme étant l'état de la technique le plus proche de l'objet de la revendication 1.

Le brevet FR 2 948 434 décrit un dispositif de montage d'un raccord dans lequel des bords opposés d'un passage d'une platine sont engagés dans des fentes opposées du raccord et un écrou avant monté sur le raccord assure le maintien de ce montage, de sorte que la platine est prise en sandwich ou enserrée entre les faces arrière des fentes du raccord et l'écrou avant.

La présente invention a pour but d'améliorer et de simplifier les dispositifs de montage d'au moins un élément de raccordement et leur installation.

Selon un mode de réalisation, il est proposé un dispositif de montage pour le raccordement au travers d'une cloison d'une conduite d'une installation sanitaire à un autre élément de l'installation, en particulier d'un organe de robinetterie.

Le dispositif de montage comprend :
- un élément de raccordement comprenant un premier embout apte à être muni dudit autre élément en avant de la cloison et un second embout apte à être raccordé à une extrémité de la conduite en arrière de la cloison,
- une platine de montage apte à être fixée contre une face avant de la cloison et présentant un passage traversant au travers duquel s'étend, en position montée, le premier embout de l'élément de raccordement,
- au moins une bague intermédiaire apte à être accouplée audit premier embout de l'élément de raccordement, et
- une bague de blocage apte à être accouplée à la platine de montage ;
tel que, en position montée, au moins une partie de la bague intermédiaire accouplée à l'élément de raccordement étant prise ou enserrée axialement entre au moins une partie de la bague de blocage accouplée à la platine de montage et une partie de la platine de montage, située à la périphérie dudit passage traversant de cette dernière.

En outre, la platine de montage et la bague intermédiaire présentent des faces annulaires d'appui de l'une sur l'autre et la bague intermédiaire et ladite bague de blocage présentent des faces annulaires d'appui de l'une sur l'autre.

Le dispositif peut comprendre des moyens de réglage de la position dudit élément de raccordement par rapport à ladite platine de montage, axialement audit premier embout.

Le dispositif peut comprendre des moyens de réglage de la position dudit élément de raccordement par rapport à ladite platine de montage, radialement audit premier embout.

Le dispositif peut comprendre des moyens de réglage de la position de ladite bague intermédiaire axialement audit premier embout.

Le dispositif peut comprendre des moyens de réglage de la position de ladite bague intermédiaire par rapport à ladite bague de blocage et/ou par rapport à ladite platine de montage et radialement audit premier embout.

Le dispositif peut comprendre des moyens d'étanchéité interposés entre ladite platine de montage et ledit premier embout.

L'appui entre lesdites faces annulaires de la platine de montage et de la bague intermédiaire peut être prévu étanche.

Lesdites faces annulaires de la platine de montage et de la bague intermédiaire et/ou lesdites faces annulaires de la bague intermédiaire et la bague de blocage peuvent avantageusement s'étendre radialement audit premier embout.

Le premier embout et la platine de montage peuvent comprendre des moyens d'indexation angulaire par conjugaison de formes.

La bague intermédiaire et la platine de montage présentent entre elles un jeu radial de réglage.

Ladite bague intermédiaire et ladite bague de blocage peuvent présenter entre elles un jeu radial de réglage.

Ledit premier embout et ladite bague intermédiaire peuvent être accouplés par conjugaison de formes.

Ledit premier embout et ladite bague intermédiaire peuvent être accouplés par vissage.

L'accouplement par vissage entre ledit premier embout et ladite bague intermédiaire peut être prévu étanche.

Ladite platine de montage et ladite bague de blocage peuvent être accouplées par conjugaison de formes.

Ladite platine de montage et ladite bague de blocage peuvent être accouplées par vissage.

Ladite platine de montage et ladite bague de blocage peuvent être pourvues de portions complémentaires d'accouplement aptes à s'engager les unes derrière les autres.

Ladite platine de montage peut présenter une forme en creux dans lequel la bague intermédiaire peut être engagée, cette forme en creux présentant un fond qui présente ledit passage traversant et une face d'appui pour ladite bague intermédiaire, située à la périphérie de ce passage traversant.

Ladite forme en creux de la platine de montage et ladite bague de blocage peuvent être pourvues de portions complémentaires d'accouplement s'engageant les unes derrière les autres.

Ladite platine de montage peut présenter des encoches de positionnement diamétralement opposées par rapport au centre dudit passage traversant.

On va maintenant décrire un dispositif de montage d'un élément de raccordement d'une installation sanitaire, à titre d'exemple non limitatif et illustré par le dessin annexé dans lequel :
- la figure 1 représente une vue éclatée en perspective d'un dispositif de montage ;
- la figure 2 représente une coupe verticale d'une installation incluant le dispositif de montage de la figure 1, montée sur une cloison verticale ;
- la figure 3 représente une coupe horizontale de l'installation de la figure 2 ;
- la figure 4 représente une coupe à 45° d'inclinaison de l'installation de la figure 2 ;
- la figure 5 représente une coupe transversale arrière de l'installation de la figure 2, selon V-V de la figure 2, de l'arrière vers l'avant ; et
- la figure 6 représente une coupe horizontale de l'installation de la figure 2, incluant deux éléments de raccordement.

Sur les figures est illustré un dispositif de montage 1 d'un élément de raccordement 2 en vue du raccordement, au travers d'une ouverture 3 d'une cloison verticale 4, d'une conduite 5 d'une installation sanitaire à un autre élément de l'installation, en particulier d'un organe de robinetterie 6, la conduite 5 s'étendant en arrière de la cloison 4 et l'organe de robinetterie 6 étant situé en avant de la cloison 4.

L'élément de raccordement 2 comprend un premier embout 7 apte à être muni de l'organe de robinetterie 6 et un second embout 8, cylindrique, apte à être raccordé à une extrémité libre de la conduite 5. Par exemple, l'élément de raccordement 2 forme un coude de raccordement, le premier embout 7 et le second embout 8 formant entre eux un angle droit ou un angle obtus, par exemple d'environ cent degrés.

Par exemple, la conduite 5 est en une matière plastique et s'étend vers le haut depuis du sol.

Le dispositif de montage 1 comprend une platine de montage 9 qui présente une face arrière et une face avant et qui est pourvue d'un passage traversant 10. La platine de montage 9 est apte à être fixée contre une face avant 11 de la cloison 4, dans une position telle que le passage traversant 10 soit situé en correspondance avec l'ouverture 3 de la cloison 4.

Le dispositif de montage 1 comprend une bague intermédiaire rapportée 12 de liaison qui est apte à être montée sur et accouplée au premier embout 7 de l'élément de raccordement 2, par exemple par conjugaison de formes. La bague intermédiaire 12 peut être disposée en un endroit quelconque choisi le long du premier embout 7 de l'élément de raccordement 2.

Le dispositif de montage 1 comprend une bague rapportée de blocage 13 qui est apte à être montée sur et accouplée à la platine de montage 9 par exemple par conjugaison de formes.

En position montée, dans laquelle la platine de montage est fixée sur la cloison 4 et le premier embout 7 de l'élément de raccordement 2 s'étend au travers du passage traversant 10 de la platine de montage 9 et perpendiculairement à cette dernière, au moins une partie de la bague intermédiaire 12 accouplée au premier embout 7 de l'élément de raccordement 2 est prise en sandwich entre au moins une partie de la platine de montage 9, située à la périphérie du passage traversant 10 de cette dernière, et au moins une partie de la bague de blocage 13 traversée par le premier embout 7 de l'élément de raccordement et accouplée à la platine de montage 9, la bague de blocage 13 agissant sur la bague intermédiaire 12 en direction de la platine de montage 9. Ainsi, l'élément de raccordement 2 est solidaire de la platine de montage 9 par l'intermédiaire de la bague de montage 12.

Les moyens d'accouplement de la bague intermédiaire 12 sur l'élément de raccordement 2 et les moyens d'accouplement de la bague de blocage 13 sur la platine de montage 9 peuvent être réalisés par exemple de la manière suivante.

Selon une variante de réalisation illustrée sur les figures, la bague intermédiaire 12 peut être accouplée au premier embout 7 par vissage, le premier embout 7 présentant un filetage périphérique depuis son extrémité libre avant et la bague intermédiaire 12 présentant un taraudage intérieur, de sorte que ce vissage se produise sans jeu ou à faible jeu entre ce filetage et ce taraudage.

Selon une variante de réalisation illustrée sur les figures, la bague de blocage 13 peut être accouplée à la platine de montage 9 par vissage, la bague de blocage 13 présentant un filetage périphérique et la platine de montage 9 présentant une forme en creux pourvue d'un taraudage intérieur.

Comme illustré sur les figures, la platine de montage 9 présente une forme en creux 14 en saillie vers l'arrière et ouverte vers l'avant, réalisée par exemple par emboutissage. Cette forme en creux 14 présente un axe perpendiculaire aux faces de la platine de montage 9 et comprend une paroi cylindrique ou tronconique 15 et un fond radial annulaire 16 délimitant en son centre le passage traversant 10.

La bague intermédiaire 12 présente une face radiale arrière 17 et une face radiale avant 18, entre lesquelles elle est formée. La face radiale arrière 17 est apte à venir en appui contre la face intérieure avant 19 du fond radial 16 de la forme en creux 14 de la platine de montage 9.

La bague de blocage 13 présente une face radiale arrière 20 qui est apte à venir en appui contre la face radiale avant 18 de la bague intermédiaire 12.

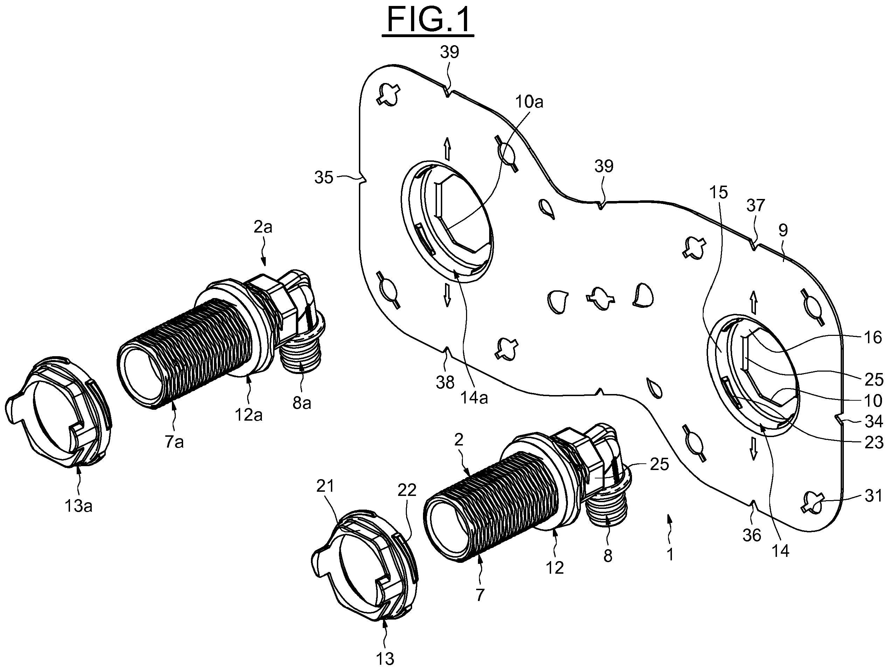

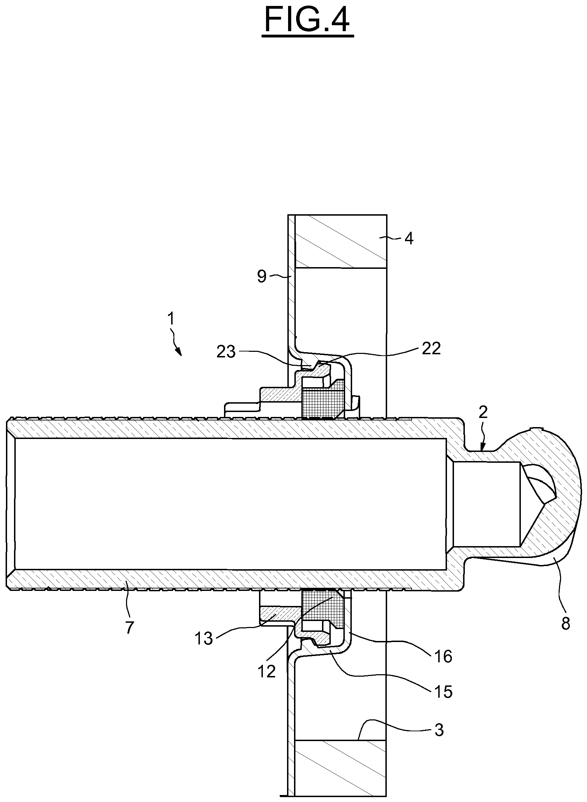

La bague de blocage 13 comprend, à la périphérie de sa partie annulaire avant, une forme en hexagone 21 apte à recevoir une clé et comprend, à la périphérie de sa partie arrière, des portions extérieures en saillie 22, par exemple au nombre de quatre, espacées dans le sens périphérique et formant des portions de filets (Figures 1 et 4).

La paroi périphérique 15 de la forme en creux 14 de la platine de montage 9 présente des portions intérieures en saillie 23, par exemple également au nombre de quatre, espacées dans le sens périphérique et formant des portions de filets (Figures 1 et 4).

Lorsque la partie arrière de la bague de blocage 13 est introduite dans la forme en creux 14 de la platine de montage 9, les portions extérieures en saillie 22 de la bague de blocage 13 sont aptes à venir en arrière des portions intérieures en saillie 23 de la forme en creux 14 de la platine de montage 9 par rotation dans un sens de la bague de blocage 13, en induisant un rapprochement de la face arrière 20 vers le fond 16 de la forme en creux 14.

Ainsi, en position montée, la bague intermédiaire 12, accouplée au premier embout 7 de l'élément de raccordement 2, est prise axialement entre le fond 16 de la forme en creux 14 de la platine de montage 9 et la bague de blocage 13, cette dernière étant accouplée à la platine de montage 9 par l'intermédiaire des portions en saillie complémentaires 22 et 23, la bague de blocage 13 agissant en direction du fond 16 de la forme en creux 14 de la platine de montage 9.

Avantageusement, la bague de blocage 13 présente un évidement arrière d'encastrement 24 dont le fond constitue la face radiale arrière 20 qui vient en appui sur la face radiale avant 18 de la bague intermédiaire 12.

La bague intermédiaire 12, la bague de blocage 13 et la forme en creux 14 de la platine de montage 9 peuvent être dimensionnées de sorte qu'en position montée, seule au moins une partie avant de la bague de blocage 13, pourvue de la forme hexagonale 21 s'étende en avant de la face avant de la plaque de montage 9.

L'élément de raccordement 2 et la platine de montage 9 présentent des moyens complémentaires d'indexation angulaire, réalisés par exemple de la manière suivante.

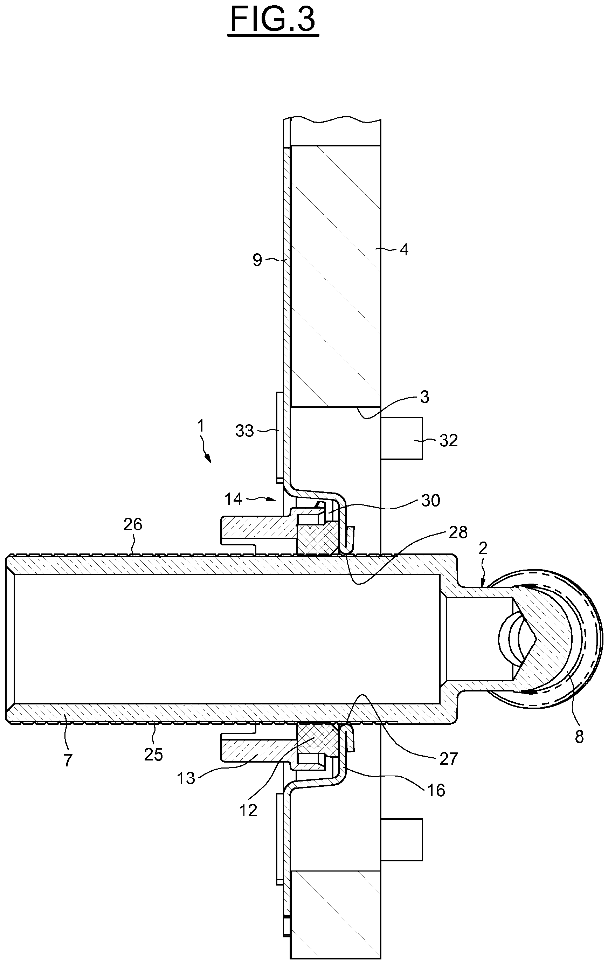

Comme illustré sur les figures 1, 3 et 5, le premier embout 7 de l'élément de raccordement 2 présente, depuis son extrémité libre avant, des méplats longitudinaux de guidage 25 et 26, diamétralement opposés et parallèles. Le passage traversant 10 du fond 16 de la forme en creux 14 de la platine de montage 9 présente des rebords plats de guidage 27 et 28, diamétralement opposés et parallèles, qui sont aptes à coopérer avec les méplats opposés 25 et 26 pour empêcher l'élément de raccordement 2 de tourner par rapport à la platine de montage 9, en particulier lors du vissage/dévissage de la bague intermédiaire 12 sur le premier embout 7 et pour donner une orientation correspondante au second embout 8 de l'élément de raccordement 2 par rapport à la platine de montage 9, par exemple vers le bas en position montée.

Selon une variante de réalisation illustrée sur les figures, le premier embout 7 de l'élément de raccordement 2 présente une pluralité de paires de méplats longitudinaux opposés 25 et 26, décalés angulairement pour donner des orientations correspondantes différentes au second embout 8 de l'élément de raccordement 2, par exemple de sorte que le premier embout 7 présente une section octogonale, dans laquelle le filetage périphérique précité est réalisé.

Avantageusement, les rebords opposés 27 et 28 du passage traversant 10 du fond 16 de la forme en creux 14 de la platine de montage 9 sont, en position montée, verticaux.

Sont également prévus des moyens de réglage vertical de l'élément de raccordement 2 par rapport au plan de la platine de montage 9 et donc radialement au premier embout 7, réalisés par exemple de la manière suivante.

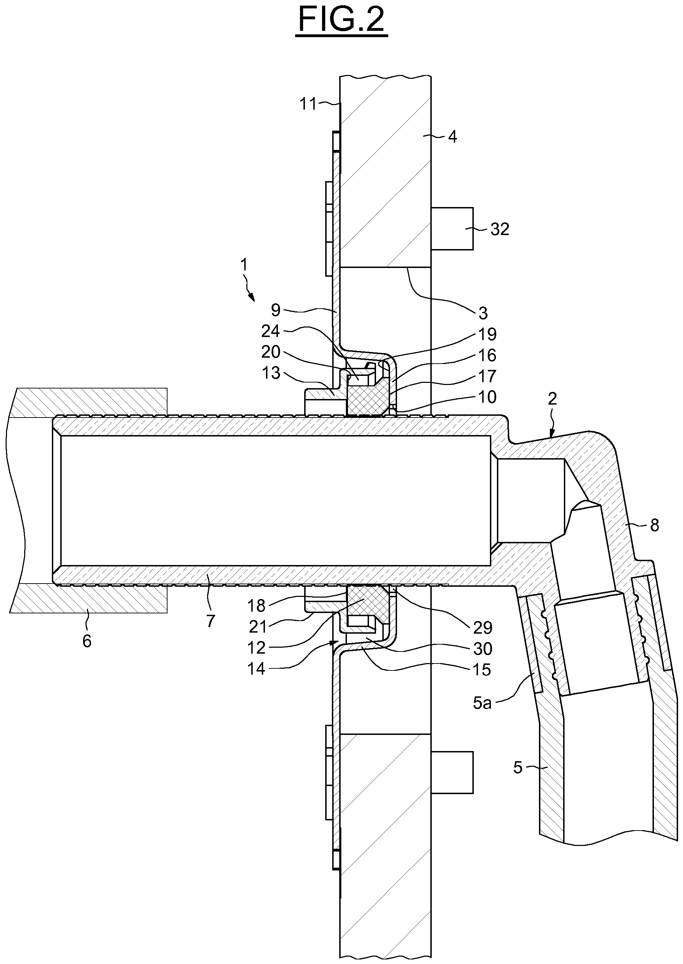

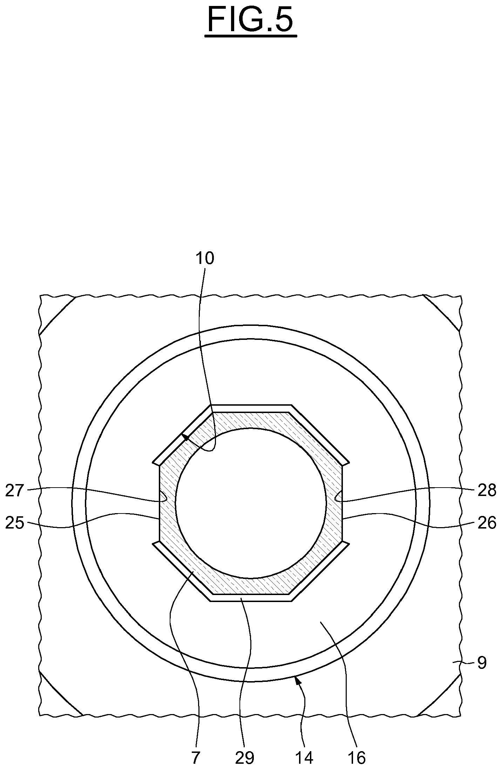

Comme illustré sur les figures 2 et 5, il est prévu un jeu radial vertical 29 entre le reste du passage traversant 10 et le premier embout 7 de l'élément de raccordement 2, au-dessus et/ou au-dessous de ce dernier. De plus, il existe un jeu radial 30 entre d'une part la bague intermédiaire 12 et d'autre part la paroi 15 de la forme en creux 14 de la platine de montage 9 et la bague de blocage 13.

Ainsi, avant blocage de la bague de blocage 13, il est possible de régler la position, radialement au premier embout 7, de l'élément de raccordement 2 par rapport à la platine et à la bague de blocage 13, en faisant glisser verticalement les méplats 25 et 26 du premier embout 7 le long des rebords 27 et 28 du passage traversant 10 de la platine de montage 9 et en faisant glisser verticalement les faces radiales 17 et 18 de la bague intermédiaire 12 respectivement sur la face radiale 19 du fond 16 de la platine de montage 9 et sur la face radiale 24 de la bague de blocage 13.

Le dispositif de montage 1 peut être installé en exécutant les opérations ci-dessous.

On réalise l'ouverture 3 au travers de la cloison 4, à la hauteur choisie.

On tire vers l'avant une portion d'extrémité de la conduite 5 au travers de l'ouverture 3.

On branche et on fixe l'extrémité libre de la conduite 5 sur le second embout 8 de l'élément de raccordement 2, grâce à une bague à sertir ou une bague à glissement 5a.

On engage le premier embout 7 de l'élément de raccordement 2 au travers du passage traversant 10 de la platine de montage 9, une paire de méplats longitudinaux opposés 25 et 26 du premier embout 7 glissant sur les rebords 27 et 28 de la platine de montage 9.

En avant de la platine de montage 9, on met en place en la vissant la bague intermédiaire 12 sur le premier embout 7 de l'élément de raccordement, jusqu'à une position axiale de réglage dans laquelle elle se situe à une distance souhaitée de l'extrémité du premier embout 7.

En déplaçant vers l'arrière l'élément de raccordement 2, on amène la bague intermédiaire 12 en appui contre le fond 16 de la forme en creux 14 de la platine de montage 9.

On applique la platine de montage 9 contre la face frontale 11 de la cloison 4 en ramenant la conduite 5 vers l'arrière au travers de l'ouverture 3 de la cloison 4 et en faisant passer le second embout 8 de l'élément de raccordement 2 au travers de l'ouverture 3 de la cloison 4, la forme en creux 14 étant en arrière du côté de ou dans l'ouverture 3 de la cloison 4.

Puis, on fixe la platine de montage à la cloison 4. Par exemple, ayant préalablement réalisé des trous dans la cloison 4 en des endroits correspondant à des orifices 31 de la platine de montage 9 et mis en place des chevilles 32 adaptées dans les trous de la cloison 4, on fixe la platine de montage grâce à des vis 33 adaptées en prise avec les chevilles.

Puis, on met en place la bague de blocage 13 sur la platine de montage 9, en mettant en prise leurs portions en saillie 22 et 23, de façon que la bague intermédiaire 12 soit disposée, sans blocage ou serrage, entre le fond 16 de la forme en creux 14 de la platine de montage 9 et la bague de blocage 13.

On règle une position radiale du premier embout 7 par rapport à la platine de montage 9 comme décrit précédemment, et on serre la bague de blocage 13 à l'aide d'une clé pour fixer solidement la bague intermédiaire 12 sur la platine de montage 9, de sorte que le premier embout 7 de l'élément de raccordement 2 soit placé dans une position verticale définitive souhaitée.

Selon une variante d'installation, si la forme de l'élément de raccordement 2 le permet, on peut engager une portion d'extrémité de la conduite 5 au travers du passage traversant 10 de la platine de montage 9, monter l'extrémité de la conduite 5 sur le second embout 8, mettre en place la bague intermédiaire 12 sur le premier embout 7, faire passer dans l'autre sens la conduite 5 et faire passer le second embout 8 et la partie arrière du premier embout 7 au travers du passage 10 de la platine de montage 9, jusqu'à ce que la bague intermédiaire 12 vienne en appui contre le fond 16 de la forme en creux 14 de la platine de montage 9. Puis, on procède à l'installation de la platine de montage 9 sur la cloison 4 et à la mise en place de la bague de blocage 13 comme décrit précédemment.

Selon une autre variante d'installation, également si la forme de l'élément de raccordement 2 le permet, on fixe la platine de montage 9 contre la cloison 4. Ayant préalablement fait passer une portion d'extrémité de la conduite 5 au travers du passage traversant 10, on branche l'extrémité libre de la conduite 5 sur le second embout 8 de l'élément de raccordement 2. On met en place la bague intermédiaire 12 sur le premier embout 7 dans une position axiale souhaitée. On fait passer la conduite 5 et le second embout 8 et la partie arrière du premier embout 7 au travers du passage 10 de la platine de montage 9, jusqu'à ce que la bague intermédiaire 12 vienne en appui contre le fond 16 de la forme en creux 14 de la platine de montage 9 installée. On met en place la bague de blocage 13 comme décrit précédemment.

L'installation étant terminée, on met en place une couche de plaques de faïence (non représentée) contre la face frontale 11 de la cloison en recouvrant la platine de montage 9, à l'exception de la zone où se situe la bague de blocage 13. Puis, on monte l'organe de robinetterie 6 sur l'extrémité libre et dépassante du premier embout 7 de l'élément de raccordement 2.

Si la longueur de la partie d'extrémité du premier embout 7 de l'élément de raccordement 2, qui dépasse par rapport à la face frontale de la couche de plaques de faïence n'est pas correcte, on peut procéder à un réglage axial final. Pour cela, on démonte la bague de blocage 13, on ressort l'élément de raccordement pour avoir accès à la bague intermédiaire 12, on visse ou on dévisse la bague intermédiaire 12 pour régler cette dernière à une nouvelle position axiale souhaitée par rapport au premier embout 7. Puis, on remet en place l'élément de raccordement 2 muni de la bague intermédiaire 12, on remet en place la bague de blocage 13 sur la platine de montage 9, on règle la position verticale du premier embout 7 et on serre la bague de blocage 13 comme décrit précédemment.

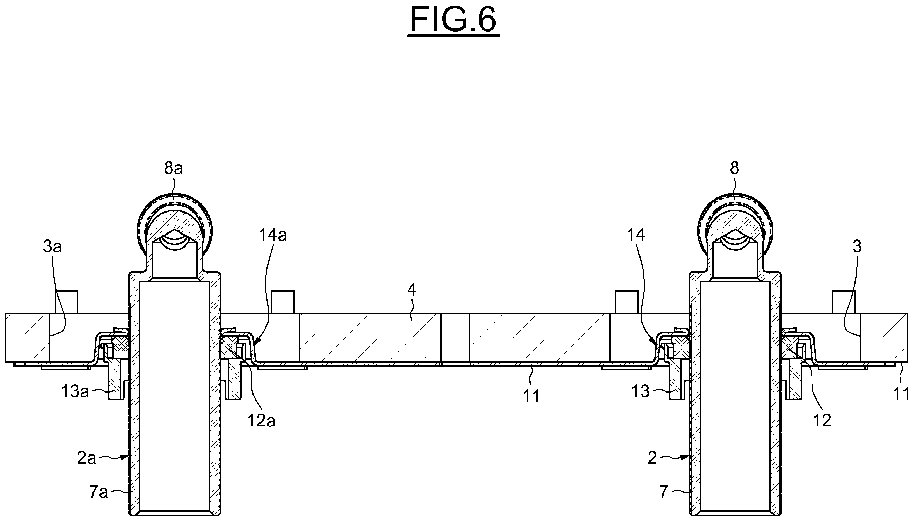

Comme illustré sur les figures 1 et 6, la platine de montage 9 peut être pourvue d'une seconde partie en creux 14a présentant un passage traversant 10a, pour le montage d'un autre élément de raccordement 2a, dont le second embout 8a peut être raccordé à une autre conduite située en arrière de la cloison 4 et au travers d'une ouverture 3a de cette dernière, ce par l'intermédiaire d'une bague intermédiaire 12a et d'une bague de blocage 13a, de façon équivalente à ce qui a été décrit précédemment.

La platine de montage 9 étant montée sur la cloison 4 dans une position telle que les éléments de raccordement 2 et 2a soient espacés dans le sens horizontal, les éléments de raccordement 2 et 2a peuvent être réglés verticalement l'un par rapport à l'autre de sorte que leurs premiers embouts 7 et 7a soient effectivement à la même hauteur, de sorte que l'organe de robinetterie qu'ils portent apparaisse comme étant effectivement disposé horizontalement.

Comme illustré sur la figure 1, la platine de montage 9 est pourvue d'encoches facilitant le traçage sur la cloison 4, utilisé pour la réalisation des ouvertures 3 et des trous 31 de fixation dans la cloison 4. Par exemple, la platine de montage 9 est pourvue, à sa périphérie, d'encoches opposées 34 et 35 déterminant une ligne de positionnement horizontal passant par les axes des formes en creux 14 et 14a, d'encoches opposées 36 et 37 déterminant une ligne de positionnement vertical passant par l'axe de la forme en creux 14 et d'encoches opposées 38 et 39 déterminant une ligne de positionnement vertical passant par l'axe de la forme en creux 14a.

La platine de montage étant plaquée contre la cloison 4 et mise en position à l'aide d'un niveau, à l'endroit souhaité, on trace sur la cloison 4 des traits aux endroits des encoches ci-dessus.

Puis, on trace une ligne horizontale joignant les traits correspondant aux encoches 34 et 35 et des lignes verticales correspondant l'une aux encoches 36 et 37 et l'autre aux encoches 38 et 39. Les points d'intersection entre la ligne horizontale et les lignes verticales déterminent les positions des centres des ouvertures 3 à réaliser, sur une même ligne horizontale et à l'entraxe souhaité correspondant à l'entraxe des embouts de l'organe de robinetterie à installer. Puis, on réalise les ouvertures 3 au travers de la cloison 4, par exemple au moyen d'une scie cloche.

A titre d'exemple, l'élément de raccordement 2 peut être en laiton, la platine de montage 9 peut être en acier, la bague intermédiaire 12 peut être en laiton ou en une matière plastique et la bague de blocage 13 peut être en laiton.

Grâce au contact annulaire entre la bague intermédiaire 12 et le fond radial 16 de la forme en creux 14 de la platine de montage 9 et grâce au montage de la bague intermédiaire 12 sur le premier embout 7 de l'élément de raccordement 2 par vissage sans jeu ou à faible jeu, il est établit une étanchéité entre l'arrière et l'avant de la plaque de montage 9, de sorte que l'espace situé en arrière de la cloison 4 et l'espace situé en avant de la cloison 4 sont isolés l'un par rapport à l'autre. Néanmoins, des bagues complémentaires d'étanchéité pourraient être prévues.

Différentes variantes de réalisation du dispositif de montage 1 sont envisageables.

La bague de blocage 13 pourrait être montée sur la platine de montage 9 par l'intermédiaire de vis de montage. Par exemple, la bague de blocage pourrait présenter une collerette périphérique venant en appui contre la platine de montage 9, cette collerette étant fixée sur la platine de montage 9 par des vis.

Une ou des rondelles pourraient être interposées, axialement au premier embout 7, entre la bague intermédiaire 12 et la platine de montage et/ou la bague de blocage 13.

La bague intermédiaire 12 pourrait être autocentrée dans la forme en creux 14 ou dans le passage traversant 10 de la platine de montage 9, par exemple par des faces d'appui tronconiques correspondantes. Dans ce cas néanmoins, le réglage vertical de l'embout 7 de l'élément de raccordement 2 par rapport à la platine de montage ne serait plus possible.

Pour indexer angulairement le premier embout 7 par rapport à la platine de montage 9, le premier embout 7 pourrait présenter au moins une gorge axiale et la platine de montage 9 pourrait présenter au moins un ergot en saillie dans le passage traversant 10 et engagé dans cette gorge. Pour que le réglage vertical soit possible, cette gorge et cet ergot devraient être situés verticalement.

Selon une variante de réalisation, la platine pourrait comporter un bourrelet annulaire tout autour de la forme en creux.

## Revendications

1. Dispositif de montage pour le raccordement au travers d'une cloison (4) d'une conduite (5) d'une installation sanitaire à un autre élément de l'installation, en particulier d'un organe de robinetterie (6), comprenant :
un élément de raccordement (2) comprenant un premier embout (7) apte à être muni dudit autre élément en avant de la cloison et un second embout (8) apte à être raccordé à une extrémité de la conduite en arrière de la cloison,
- une platine de montage (9) apte à être fixée contre une face avant de la cloison (4) et présentant un passage traversant (10) au travers duquel s'étend, en position montée, le premier embout de l'élément de raccordement,
- au moins une bague intermédiaire (12) apte à être accouplée audit premier embout (7) de l'élément de raccordement (2), et
- au moins une bague de blocage (13) apte à être accouplée à la platine de montage (9) ;
tel que, en position montée, au moins une partie de la bague intermédiaire (12) accouplée à l'élément de raccordement (2) étant prise ou enserrée axialement entre au moins une partie de la bague de blocage (13) accouplée à la platine de montage (9) et une partie (16) de la platine de montage (9), située à la périphérie dudit passage traversant (10) de cette dernière ;
dans lequel la platine de montage (9) et la bague intermédiaire (12) présentent des faces annulaires (16, 17) d'appui de l'une sur l'autre et dans lequel la bague intermédiaire (12) et la bague de blocage (13) présentent des faces annulaires (18, 20) d'appui de l'une sur l'autre.

2. Dispositif selon la revendication 1, comprenant des moyens de réglage de la position dudit élément de raccordement par rapport à ladite platine de montage, axialement audit premier embout.

3. Dispositif selon l'une des revendications 1 et 2, comprenant des moyens de réglage de la position dudit élément de raccordement par rapport à ladite platine de montage, radialement audit premier embout.

4. Dispositif selon l'une quelconque des revendications précédentes, comprenant des moyens de réglage de la position de ladite bague intermédiaire axialement audit premier embout.

5. Dispositif selon l'une quelconque des revendications précédentes, comprenant des moyens de réglage de la position de ladite bague intermédiaire par rapport à ladite bague de blocage et/ou par rapport à ladite platine de montage et radialement audit premier embout.

6. Dispositif selon l'une quelconque des revendications précédentes, comprenant des moyens d'étanchéité (12) interposés entre ladite platine de montage et ledit premier embout (7).

7. Dispositif selon l'une quelconque des revendications précédentes, dans lequel l'appui entre lesdites faces annulaires (18, 20) de la platine de montage (9) et de la bague intermédiaire (12) est étanche.

8. Dispositif selon l'une quelconque des revendications précédentes, dans lequel lesdites faces annulaires (16, 17) de la platine de montage (9) et de la bague intermédiaire (12) et/ou lesdites faces annulaires (18, 20) de la bague intermédiaire (12) et la bague de blocage (13) s'étendent radialement audit premier embout (7).

9. Dispositif selon l'une quelconque des revendications précédentes, dans lequel le premier embout (7) et la platine de montage (9) comprennent des moyens d'indexation angulaire (25, 27) par conjugaison de formes.

10. Dispositif selon l'une quelconque des revendications précédentes, dans lequel la bague intermédiaire (12) et la platine de montage (9) présentent entre elles un jeu radial de réglage (29).

11. Dispositif selon l'une quelconque des revendications précédentes, dans lequel la bague intermédiaire (12) et la bague de blocage (13) présentent entre elles un jeu radial de réglage (30).

12. Dispositif selon l'une quelconque des revendications précédentes, dans lequel ledit premier embout (7) et ladite bague intermédiaire (12) sont accouplés par conjugaison de formes.

13. Dispositif selon l'une quelconque des revendications précédentes, dans lequel ledit premier embout (7) et ladite bague intermédiaire (12) sont accouplés par vissage.

14. Dispositif selon la revendication 13, dans lequel l'accouplement par vissage entre ledit premier embout (7) et ladite bague intermédiaire (12) est étanche.

15. Dispositif selon l'une quelconque des revendications précédentes, dans lequel ladite platine de montage (9) et ladite bague de blocage (13) sont accouplées par conjugaison de formes.

16. Dispositif selon l'une quelconque des revendications précédentes, dans lequel ladite platine de montage (9) et ladite bague de blocage (13) sont accouplées par vissage.

17. Dispositif selon l'une quelconque des revendications précédentes, dans lequel ladite platine de montage (9) et ladite bague de blocage (13) sont pourvues de portions complémentaires d'accouplement (22, 23) engagées les unes derrière les autres.

18. Dispositif selon l'une quelconque des revendications précédentes, dans lequel la platine de montage (9) présente une forme en creux (14) dans lequel la bague intermédiaire (13) est engagée, cette forme en creux (14) présentant un fond (16) qui présente ledit passage traversant (10) et une face d'appui (17) pour ladite bague intermédiaire (12), située à la périphérie de ce passage traversant (10).

19. Dispositif selon la revendication 18, dans lequel ladite forme en creux (14) de la platine de montage (9) et ladite bague de blocage (13) sont pourvues de portions complémentaires d'accouplement (22, 23) engagées les unes derrière les autres.

20. Dispositif selon l'une quelconque des revendications précédentes, dans lequel ladite platine de montage (9) présente des paires d'encoches de positionnement (34-39) diamétralement opposées par rapport au centre dudit passage traversant (10).

## Patentansprüche

1. Montagevorrichtung zum Anschließen einer Leitung (5) einer Sanitärinstallation durch eine Trennwand (4) hindurch an ein anderes Element der Installation, insbesondere ein Armaturenorgan (6), umfassend:
- ein Anschlusselement (2), umfassend ein erstes Endstück (7), das geeignet ist, vor der Trennwand mit dem anderen Element versehen zu werden, und ein zweites Endstück (8), das geeignet ist, hinter der Trennwand an ein Ende der Leitung angeschlossen zu werden,
- eine Montageplatte (9), die geeignet ist, an einer Vorderseite der Trennwand (4) befestigt zu werden und eine Durchführung (10) aufweist, durch die hindurch sich das erste Endstück des Anschlusselements in der montierten Position erstreckt,
- mindestens einen Zwischenring (12), der geeignet ist, mit dem ersten Endstück (7) des Anschlusselements (2) verbunden zu werden, und
- mindestens einen Sicherungsring (13), der geeignet ist, mit der Montageplatte (9) verbunden zu werden;
so dass in der montierten Position mindestens ein Teil des mit dem Anschlusselement (2) verbundenen Zwischenrings (12) axial zwischen mindestens einem Teil des mit der Montageplatte (9) verbundenen Sicherungsrings (13) und einem Teil (16) der Montageplatte (9), der am Umfang von deren Durchführung (10) gelegen ist, aufgenommen oder eingespannt ist;
wobei die Montageplatte (9) und der Zwischenring (12) ringförmige Anlageflächen (16, 17) aneinander aufweisen und wobei der Zwischenring (12) und der Sicherungsring (13) ringförmige Anlageflächen (18, 20) aneinander aufweisen.

2. Vorrichtung nach Anspruch 1, umfassend Mittel zum Einstellen der Position des Anschlusselements in Bezug auf die Montageplatte, axial zum ersten Endstück.

3. Vorrichtung nach einem der Ansprüche 1 und 2, umfassend Mittel zum Einstellen der Position des Anschlusselements in Bezug auf die Montageplatte, radial zum ersten Endstück.

4. Vorrichtung nach einem der vorhergehenden Ansprüche, umfassend Mittel zum Einstellen der Position des Zwischenrings axial zum ersten Endstück.

5. Vorrichtung nach einem der vorhergehenden Ansprüche, umfassend Mittel zum Einstellen der Position des Zwischenrings in Bezug auf den Sicherungsring und/oder in Bezug auf die Montageplatte und radial zum ersten Endstück.

6. Vorrichtung nach einem der vorhergehenden Ansprüche, umfassend Dichtungsmittel (12), die zwischen die Montageplatte und das erste Endstück (7) gesetzt sind.

7. Vorrichtung nach einem der vorhergehenden Ansprüche, wobei die Anlage zwischen den ringförmigen Flächen (18, 20) der Montageplatte (9) und des Zwischenrings (12) dicht ist.

8. Vorrichtung nach einem der vorhergehenden Ansprüche, wobei sich die ringförmigen Flächen (16, 17) der Montageplatte (9) und des Zwischenrings (12) und/oder die ringförmigen Flächen (18, 20) des Zwischenrings (12) und des Sicherungsrings (13) radial zum ersten Endstück (7) erstrecken.

9. Vorrichtung nach einem der vorhergehenden Ansprüche, wobei das erste Endstück (7) und die Montageplatte (9) Winkelindexierungsmittel (25, 27) durch Formschluss umfassen.

10. Vorrichtung nach einem der vorhergehenden Ansprüche, wobei der Zwischenring (12) und die Montageplatte (9) zwischen sich ein radiales Einstellspiel (29) aufweisen.

11. Vorrichtung nach einem der vorhergehenden Ansprüche, wobei der Zwischenring (12) und der Sicherungsring (13) zwischen sich ein radiales Einstellspiel (30) aufweisen.

12. Vorrichtung nach einem der vorhergehenden Ansprüche, wobei das erste Endstück (7) und der Zwischenring (12) formschlüssig verbunden sind.

13. Vorrichtung nach einem der vorhergehenden Ansprüche, wobei das erste Endstück (7) und der Zwischenring (12) durch Schrauben verbunden sind.

14. Vorrichtung nach Anspruch 13, wobei die Schraubverbindung zwischen dem ersten Endstück (7) und dem Zwischenring (12) dicht ist.

15. Vorrichtung nach einem der vorhergehenden Ansprüche, wobei die Montageplatte (9) und der Sicherungsring (13) formschlüssig verbunden sind.

16. Vorrichtung nach einem der vorhergehenden Ansprüche, wobei die Montageplatte (9) und der Sicherungsring (13) durch Schrauben verbunden sind.

17. Vorrichtung nach einem der vorhergehenden Ansprüche, wobei die Montageplatte (9) und der Sicherungsring (13) mit komplementär ausgebildeten Verbindungsabschnitten (22, 23) versehen sind, die einander hintergreifen.

18. Vorrichtung nach einem der vorhergehenden Ansprüche, wobei die Montageplatte (9) eine Vertiefung (14) aufweist, in die der Zwischenring (13) eingeführt wird, wobei diese Vertiefung (14) einen Boden (16) aufweist, der die Durchführung (10) und eine Anlagefläche (17) für den Zwischenring (12), die am Umfang dieser Durchführung (10) gelegen ist, aufweist.

19. Vorrichtung nach Anspruch 18, wobei die Vertiefung (14) der Montageplatte (9) und der Sicherungsring (13) mit komplementär ausgebildeten Verbindungsabschnitten (22, 23) versehen sind, die einander hintergreifen.

20. Vorrichtung nach einem der vorhergehenden Ansprüche, wobei die Montageplatte (9) Positionierungskerbenpaare (34-39) aufweist, die in Bezug auf den Mittelpunkt der Durchführung (10) diametral entgegengesetzt sind.

## Claims

1. Mounting device for connecting, through a partition (4), a pipe (5) of a sanitary installation to another installation element, in particular a plumbing-fitting member (6), comprising:
a connecting element (2) comprising a first end piece (7) that is able to be provided with said other element in front of the partition and a second end piece (8) that is able to be connected to an end of the pipe behind the partition,
- a mounting plate (9) that is able to be secured to a front face of the partition (4) and has a through-passage (10) through which, in the mounted position, the first end piece of the connecting element extends,
- at least one intermediate ring (12) that is able to be coupled to said first end piece (7) of the connecting element (2) and
- at least one locking ring (13) that is able to be coupled to the mounting plate (9);
such that, in the mounted position, at least a part of the intermediate ring (12) coupled to the connecting element (2) is held or gripped axially between at least a part of the locking ring (13) coupled to the mounting plate (9) and a part (16) of the mounting plate (9) that is situated at the periphery of said through-passage (10) in the latter;
wherein the mounting plate (9) and the intermediate ring (12) have annular bearing faces (16, 17) for bearing against one another, and wherein the intermediate ring (12) and the locking ring (13) have annular bearing faces (18, 20) for bearing against one another.

2. Device according to Claim 1, comprising means for adjusting the position of said connecting element with respect to said mounting plate, axially with respect to said first end piece.

3. Device according to either of Claims 1 and 2, comprising means for adjusting the position of said connecting element with respect to said mounting plate, radially with respect to said first end piece.

4. Device according to any one of the preceding claims, comprising means for adjusting the position of said intermediate ring axially with respect to said first end piece.

5. Device according to any one of the preceding claims, comprising means for adjusting the position of said intermediate ring with respect to said locking ring and/or with respect to said mounting plate and radially with respect to said first end piece.

6. Device according to any one of the preceding claims, comprising sealing means (12) interposed between said mounting plate and said first end piece (7).

7. Device according to any one of the preceding claims, wherein the contact between said annular faces (18, 20) of the mounting plate (9) and the intermediate ring (12) is leaktight.

8. Device according to any one of the preceding claims, wherein said annular faces (16, 17) of the mounting plate (9) and of the intermediate ring (12) and/or said annular faces (18, 20) of the intermediate ring (12) and the locking ring (13) extend radially with respect to said first end piece (7).

9. Device according to any one of the preceding claims, wherein the first end piece (7) and the mounting plate (9) comprise means (25, 27) for angular indexing by way of mating shapes.

10. Device according to any one of the preceding claims, wherein the intermediate ring (12) and the mounting plate (9) have a radial adjusting clearance (29) between one another.

11. Device according to any one of the preceding claims, wherein the intermediate ring (12) and the locking ring (13) have a radial adjusting clearance (30) between one another.

12. Device according to any one of the preceding claims, wherein said first end piece (7) and said intermediate ring (12) are coupled by way of mating shapes.

13. Device according to any one of the preceding claims, wherein said first end piece (7) and said intermediate ring (12) are coupled by screwing.

14. Device according to Claim 13, wherein the screw coupling between said first end piece (7) and said intermediate ring (12) is leaktight.

15. Device according to any one of the preceding claims, wherein said mounting plate (9) and said locking ring (13) are coupled by way of mating shapes.

16. Device according to any one of the preceding claims, wherein said mounting plate (9) and said locking ring (13) are coupled by screwing.

17. Device according to any one of the preceding claims, wherein said mounting plate (9) and said locking ring (13) are provided with complementary coupling portions (22, 23) fitted one behind the other.

18. Device according to any one of the preceding claims, wherein the mounting plate (9) has a recessed shape (14) in which the intermediate ring (13) is fitted, this recessed shape (14) having a bottom (16) that has said through-passage (10) and a bearing face (17) for said intermediate ring (12), situated at the periphery of this through-passage (10).

19. Device according to Claim 18, wherein said recessed shape (14) of the mounting plate (9) and said locking ring (13) are provided with complementary coupling portions (22, 23) fitted one behind the other.

20. Device according to any one of the preceding claims, wherein said mounting plate (9) has pairs of positioning notches (34-39) that are diametrically opposite one another with respect to the centre of said through-passage (10).
